# EUROPEAN PATENT APPLICATION

(11) **EP 4 749 534 A1**
(43) Date of publication of application: **27.05.2026**
(21) Application number: 24220075.6
(22) Date of filing: 16.12.2024
(51) Int. Cl.: G06N 3/098, G06N 3/0475, G06N 3/045, G06N 3/096

(54) **FEDERATED CONTINUAL LEARNING METHOD FOR LARGE MULTIMODAL MODEL AND LEARNING DEVICE USING THE SAME**

(30) Priority: 20.11.2024 KR 20240166731
(71) Applicant: Seoul National University R&DB Foundation, Seoul 08826 (KR); UIF (University Industry Foundation), Yonsei University, Seoul 03722 (KR)
(72) Inventor: KIM, Taeheon, 08798 Seoul (KR); SEO, Minhyuk, 03441 Seoul (KR); CHOI, Jonghyun, 03711 Seoul (KR)
(74) Representative: AWA Sweden AB

(57) **Abstract**

The present disclosure provides a federated continual learning method for a large multimodal model, comprising steps of: inputting at least one training data to the m-th local large multimodal model to (i) generate an embedding vector, (ii) (ii_1) generate an (m_1)-th local prompt vector and an (m_1)-th global prompt vector, and merge the (m_1)-th local prompt vector and the (m_1)-th global prompt vector to thereby generate an (m_1)-th merged prompt vector, and (ii_2) generate a first hidden status vector, (iii) (iii_1) generate an (m_j)-th local prompt vector and an (m_j)-th global prompt vector, and merge the (m_j)-th local prompt vector and the (m_j)-th global prompt vector to thereby generate an (m_j)-th merged prompt vector, and (iii_2) generate a j-th hidden status vector, and (iv) repeat learning iteration to the training data; and transmitting updated information of the local prompt generators to thereby update the global prompt generators.

## Description

This present application claims the benefit of the earlier filing date of Korean patent application No. 10-2024-0166731, filed on November 20, 2024, the entire contents of which being incorporated herein by reference.

The present disclosure relates to a federated continual learning method for a large multimodal model and a learning device using the same.

LLM (i.e., Large Language Model) is a language model trained with a large scale of data, purposed for processing natural language like a human, providing answers for complicated questions, and performing various language operations.

However, text data is not the only type of data in real-world, and data of various modalities such as image, audio, video exist in real-world.

Therefore, a model capable of not only understanding text but also understanding and processing data of various modalities simultaneously is required. Thus, a LMM (i.e., Large Multimodal Model) or an MM-LLM (i.e., Multimodal-Large Language Model) is disclosed.

These large multimodal models are designed to generate output for a query given as a visual input. These large multimodal models utilize architectures such as a vision encoder which converts image into text, the LLM, and a vision-language cross-modal connector which connects the vision encoder and the LLM, etc. There are various models such as GPT-4 provided by OpenAI, Gemini of Google, and LLaVA (Large Language and Vision Assistant) which has a great capability of understanding context in a picture.

On the other hand, as a learning method of the large multimodal model, a federated learning is required for data privacy and security, and a continual learning is also required for adaptation to new data. Hence, a federated continual learning fits with the large multimodal model.

Prior art related to the federated continual learning includes papers, e.g., 'Zhang et al., TARGET: Federated Class-Continual Learning via Exemplar-Free Distillation, ETH Zurich & Sony AI, ICCV 2023', 'Qi et al., Better Generative Replay for Continual Federated Learning, Adobe Research, ICLR 2023', 'Bakman et al., Federated Orthogonal Training: Mitigating Global Catastrophic Forgetting in Continual Federated Learning, USC, ICLR 2024' and 'Wuerkaixi et al., Accurate Forgetting for Heterogeneous Federated Continual Learning, Tsinghua Univ, ICLR 2024'.

According to the federated continual learning presented in the papers above, the data that clients use for the federated continual learning is different, but each of the clients performs the same tasks.

However, in real-world, downstream tasks of clients are diverse, such as Visual Commonsense Reasoning (VCR) tasks that predict correct answers and provide persuasive reasoning paths, Visual Question and Answering (VQA) tasks that ask and answer questions, Visual Dialog (VD) tasks that provide dialog, etc., and the diversity of the downstream tasks of the clients was not reflected in the federated continual learning proposed in the above papers.

In addition, the papers 'Wang et al., Learning to Prompt for Continuous Learning, CVPR 2022' and 'Wang et al., DualPrompt: Complementary Prompting for Rehearsal-free Continuous Learning, ECCV 2022' describe a prompt pool-based continual learning method, and the paper 'Jung et al., Generating Instance-level Prompts for Rehearsal-free Continuous Learning, ICCV 2023 Oral' describes a prompt generator-based continual learning method.

The prompt pool-based continual learning can prevent catastrophic forgetting in the continual learning by training each of different prompts for each of tasks the model intends to perform through task IDs, but the prompt pool-based continual learning has problems in that it requires the task IDs during a learning process, and it does not work well with a domain generalizing, meaning that the prompt pool-based continual learning does not work well with data whose distributions are different from those of images used for training.

Also, the prompt generator-based continual learning has an advantage of not requiring the task IDs and working well with the domain generalization, but has a problem of suffering from the catastrophic forgetting due to updated parameters of the prompt generator.

Thus, the applicant proposes a federated continual learning method that does not require the task IDs and can avoid the catastrophic forgetting.

It is an object of the present disclosure to solve all the aforementioned problems.

It is another object of the present disclosure to provide a method for a federated continual learning of a large multimodal model without using task IDs.

It is yet another object of the present disclosure to provide a method for the federated continual learning of the large multimodal model that avoids catastrophic forgetting.

In accordance with one aspect of the present disclosure, there is provided a federated continual learning method for a large multimodal model, comprising steps of: (a) inputting, by a learning device, at least one training data, which includes natural language instructing data for training and vision data for training, obtained from an m-th training data set having been generated to perform a federated continual learning on an m-th local large multimodal model, to the m-th local large multimodal model, wherein the learning device is for performing a federated continual learning on the m-th local large multimodal model which is selected among a first local large multimodal model having been generated to perform a first task to an n-th local large multimodal model having been generated to perform an n-th task by referring to a trained global large multimodal model stored in a server, wherein n is an integer equal to or larger than 2, to thereby allow the m-th local large multimodal model to (i) embed the natural language instructing data for training through a text encoder to thereby generate word tokens, embed the vision data for training through a vision encoder to thereby generate visual features, convert the visual features through a projection layer to thereby generate visual tokens, and embed the word tokens and the visual tokens through an embedding layer to thereby generate an embedding vector, (ii) (ii_1) generate an (m_1)-th local prompt vector from the embedding vector through an (m_1)-th local prompt generator, generate an (m_1)-th global prompt vector from the embedding vector through a first global prompt generator, wherein the first global prompt generator corresponds to a global large multimodal model and wherein the first global prompt generator is updated at a present time by referring to at least part of a (1_1)-th local prompt generator corresponding to the first local large multimodal model to an (n_1)-th local prompt generator corresponding to the n-th local large multimodal model, and merge the (m_1)-th local prompt vector and the (m_1)-th global prompt vector to thereby generate an (m_1)-th merged prompt vector, and (ii_2) perform operation on the embedding vector by referring to the (m_1)-th merged prompt vector through an (m_1)-th transformer block of a large language model to thereby generate a first hidden status vector, (iii) (iii_1) generate an (m_j)-th local prompt vector from a (j-1)-th hidden status vector through an (m_j)-th local prompt generator, wherein j is an integer increasing from 2 to k and wherein k is an integer equal to or larger than 2, generate an (m_j)-th global prompt vector from the (j-1)-th hidden status vector through a j-th global prompt generator, wherein the j-th global prompt generator corresponds to the global large multimodal model and wherein the j-th global prompt generator is updated at a present time by referring to at least part of a (1_j)-th local prompt generator corresponding to the first local large multimodal model to an (n_j)-th local prompt generator corresponding to the n-th local large multimodal model, and merge the (m_j)-th local prompt vector and the (m_j)-th global prompt vector to thereby generate an (m_j)-th merged prompt vector, and (iii_2) perform operation on the (j-1)-th hidden status vector by referring to the (m_j)-th merged prompt vector through an (m_j)-th transformer block of the large language model to thereby generate a j-th hidden status vector, and (iv) repeat learning iteration using a loss having been generated by referring to a k-th hidden status vector output from an (m_k)-th transformer block and a Ground Truth corresponding to at least one of the training data, wherein the learning iteration is updating at least part of the (m_k)-th transformer block to the (m_1)-th transformer block and the (m_k)-th local prompt generator to the (m_1)-th local prompt generator by using the loss; and (b) when a repeated cardinal number of the learning iteration reaches a predetermined number so that one learning round is completed, transmitting, by the learning device, at least part of updated information of the (m_1)-th local prompt generator to the (m_k)-th local prompt generator, to thereby update the first global prompt generator to the k-th global prompt generator of the global large multimodal model by referring to at least part of updated information of the (1_1)-th local prompt generator to a (1_k)-th local prompt generator corresponding to the first local large multimodal model to updated information of the (n_1)-th local prompt generator to an (n_k)-th local prompt generator corresponding to the n-th local large multimodal model.

As one example, at the step of (a), in case of updating the (m_k)-th local prompt generator to the (m_1)-th local prompt generator, the learning device updates parameters of the (m_k)-th local prompt generator to parameters of the (m_1)-th local prompt generator respectively by using an (m_k)-th EMA (Exponential Moving Average) according to a gradient variance of the (m_k)-th local prompt generator to an (m_1)-th EMA according to a gradient variance of the (m_1)-th local prompt generator respectively.

As another example, at the step of (a), the learning device allows the m-th local large multimodal model to: at the (ii-1), (ii-1-a) perform a self-attention on the embedding vector through an (m_1)-th local attention layer of the (m_1)-th local prompt generator to thereby generate an (m_1)-th local value vector, an (m_1)-th local key vector and an (m_1)-th local downsampling vector, combine the (m_1)-th local value vector, an (m_1)-th local key vector and the (m_1)-th local downsampling vector to thereby generate an (m_1)-th local self-attention vector, generate an (m_1)-th local value prompt vector from the (m_1)-th local self-attention vector through an (m_1)-th local value prompt generator of the (m_1)-th local prompt generator, generate an (m_1)-th local key prompt vector from the (m_1)-th local self-attention vector through an (m_1)-th local key prompt generator of the (m_1)-th local prompt generator, and generate an (m_1)-th local downsampling prompt vector from the (m_1)-th local self-attention vector through an (m_1)-th local downsampling prompt generator of the (m_1)-th local prompt generator, (ii-1-b) perform the self-attention on the embedding vector through a first global attention layer of the first global prompt generator to thereby generate a first global value vector, a first global key vector and a first global downsampling vector, combine the first global value vector, the first global key vector and the first global downsampling vector to thereby generate a first global self-attention vector, generate a first global value prompt vector from the first global self-attention vector through a first global value prompt generator of the first global prompt generator, generate a first global key prompt vector from the first global self-attention vector through a first global key prompt generator of the first global prompt generator, and generate a first global downsampling prompt vector from the first global self-attention vector through a first global downsampling prompt generator of the first global prompt generator, and (ii-1-c) merge the (m_1)-th local value prompt vector and the first global value prompt vector to thereby generate a (m_1)-th merged value prompt vector, merge the (m_1)-th local key prompt vector and the first global key prompt vector to thereby generate a (m_1)-th merged key prompt vector, and merge the (m_1)-th local downsampling prompt vector and the first global downsampling prompt vector to thereby generate a (m_1)-th merged downsampling prompt vector, and at the (iii_1), (iii-1-a) perform a self-attention on the (j-1)-th hidden status vector through an (m_j)-th local attention layer of the (m_j)-th local prompt generator to thereby generate an (m_j)-th local value vector, an (m_j)-th local key vector and an (m_j)-th local downsampling vector, combine the (m_j)-th local value vector, an (m_j)-th local key vector and the (m_j)-th local downsampling vector to thereby generate an (m_j)-th local self-attention vector, generate an (m_j)-th local value prompt vector from the (m_j)-th local self-attention vector through an (m_j)-th local value prompt generator of the (m_j)-th local prompt generator, generate an (m_j)-th local key prompt vector from the (m_j)-th local self-attention vector through an (m_j)-th local key prompt generator of the (m_j)-th local prompt generator, and generate an (m_j)-th local downsampling prompt vector from the (m_j)-th local self-attention vector through an (m_j)-th local downsampling prompt generator of the (m_j)-th local prompt generator, (iii-1-b) perform the self-attention on the (j-1)-th hidden status vector through a j-th global attention layer of the first global prompt generator to thereby generate a j-th global value vector, a j-th global key vector and a j-th global downsampling vector, combine the j-th global value vector, the j-th global key vector and the j-th global downsampling vector to thereby generate a j-th global self-attention vector, generate a j-th global value prompt vector from the j-th global self-attention vector through a j-th global value prompt generator of the j-th global prompt generator, generate a j-th global key prompt vector from the j-th global self-attention vector through a j-th global key prompt generator of the j-th global prompt generator, and generate a j-th global downsampling prompt vector from the j-th global self-attention vector through a j-th global downsampling prompt generator of the j-th global prompt generator, and (iii-1-c) merge the (m_j)-th local value prompt vector and the j-th global value prompt vector to thereby generate a (m_j)-th merged value prompt vector, merge the (m_j)-th local key prompt vector and the j-th global key prompt vector to thereby generate a (m_j)-th merged key prompt vector, and merge the (m_j)-th local downsampling prompt vector and the j-th global downsampling prompt vector to thereby generate a (m_j)-th merged downsampling prompt vector.

As another example, at the step of (a), the learning device allows the m-th local large multimodal model to: at the (ii_2), perform operation on the embedding vector through the (m_1)-th transformer block by referring to the (m_1)-th merged value prompt vector, the (m_1)-th merged key prompt vector, and the (m_1)-th merged downsmapling prompt vector, to thereby generate the first hidden status vector, and at the (iii_1), perform operation on the (j-1)-th hidden status vector through the (m_j)-th transformer block by referring to the (m_j)-th merged value prompt vector, the (m_j)-th merged key prompt vector, and the (m_j)-th merged downsmapling prompt vector, to thereby generate the j-th hidden status vector.

As another example, at the step of (b), the learning device transmits the updated information of the (m_1)-th local prompt generator to the (m_k)-th local prompt generator to the server, and thus allows the server to update the first global prompt generator to the k-th global prompt generator respectively by using at least part of first average parameters to k-th average parameters respectively, wherein the first average parameters are obtained from averages or weighted averages of parameters of the (1_1)-th local prompt generator to parameters of the (n_1)-th local prompt generator, and wherein the k-th average parameters are obtained from averages or weighted averages of parameters of the (1_k)-th local prompt generator to parameters of the (n_k)-th local prompt generator.

In accordance with another aspect of the present disclosure, there is provided a learning device of a federated continual learning for a large multimodal model, comprising: at least one memory that stores instructions; and at least one processor configured to execute the instructions to perform processes of: (I) inputting at least one training data, which includes natural language instructing data for training and vision data for training, obtained from an m-th training data set having been generated to perform a federated continual learning on an m-th local large multimodal model, to the m-th local large multimodal model, wherein the processor is for performing a federated continual learning on the m-th local large multimodal model which is selected among a first local large multimodal model having been generated to perform a first task to an n-th local large multimodal model having been generated to perform an n-th task by referring to a trained global large multimodal model stored in a server, wherein n is an integer equal to or larger than 2, to thereby allow the m-th local large multimodal model to (i) embed the natural language instructing data for training through a text encoder to thereby generate word tokens, embed the vision data for training through a vision encoder to thereby generate visual features, convert the visual features through a projection layer to thereby generate visual tokens, and embed the word tokens and the visual tokens through an embedding layer to thereby generate an embedding vector, (ii) (ii_1) generate an (m_1)-th local prompt vector from the embedding vector through an (m_1)-th local prompt generator, generate an (m_1)-th global prompt vector from the embedding vector through a first global prompt generator, wherein the first global prompt generator corresponds to a global large multimodal model and wherein the first global prompt generator is updated at a present time by referring to at least part of a (1_1)-th local prompt generator corresponding to the first local large multimodal model to an (n_1)-th local prompt generator corresponding to the n-th local large multimodal model, and merge the (m_1)-th local prompt vector and the (m_1)-th global prompt vector to thereby generate an (m_1)-th merged prompt vector, and (ii_2) perform operation on the embedding vector by referring to the (m_1)-th merged prompt vector through an (m_1)-th transformer block of a large language model to thereby generate a first hidden status vector, (iii) (iii_1) generate an (m_j)-th local prompt vector from a (j-1)-th hidden status vector through an (m_j)-th local prompt generator, wherein j is an integer increasing from 2 to k and wherein k is an integer equal to or larger than 2, generate an (m_j)-th global prompt vector from the (j-1)-th hidden status vector through a j-th global prompt generator, wherein the j-th global prompt generator corresponds to the global large multimodal model and wherein the j-th global prompt generator is updated at a present time by referring to at least part of a (1_j)-th local prompt generator corresponding to the first local large multimodal model to an (n_j)-th local prompt generator corresponding to the n-th local large multimodal model, and merge the (m_j)-th local prompt vector and the (m_j)-th global prompt vector to thereby generate an (m_j)-th merged prompt vector, and (iii_2) perform operation on the (j-1)-th hidden status vector by referring to the (m_j)-th merged prompt vector through an (m_j)-th transformer block of the large language model to thereby generate a j-th hidden status vector, and (iv) repeat learning iteration using a loss having been generated by referring to a k-th hidden status vector output from an (m_k)-th transformer block and a Ground Truth corresponding to at least one of the training data, wherein the learning iteration is updating at least part of the (m_k)-th transformer block to the (m_1)-th transformer block and the (m_k)-th local prompt generator to the (m_1)-th local prompt generator by using the loss; and (II) when a repeated cardinal number of the learning iteration reaches a predetermined number so that one learning round is completed, transmitting at least part of updated information of the (m_1)-th local prompt generator to the (m_k)-th local prompt generator, to thereby update the first global prompt generator to the k-th global prompt generator of the global large multimodal model by referring to at least part of updated information of the (1_1)-th local prompt generator to a (1_k)-th local prompt generator corresponding to the first local large multimodal model to updated information of the (n_1)-th local prompt generator to an (n_k)-th local prompt generator corresponding to the n-th local large multimodal model.

As another example, at the process of (I), in case of updating the (m_k)-th local prompt generator to the (m_1)-th local prompt generator, the processor updates parameters of the (m_k)-th local prompt generator to parameters of the (m_1)-th local prompt generator respectively by using an (m_k)-th EMA (Exponential Moving Average) according to a gradient variance of the (m_k)-th local prompt generator to an (m_1)-th EMA according to a gradient variance of the (m_1)-th local prompt generator respectively.

As another example, at the process of (I), the processor allows the m-th local large multimodal model to: at the (ii-1), (ii-1-a) perform a self-attention on the embedding vector through an (m_1)-th local attention layer of the (m_1)-th local prompt generator to thereby generate an (m_1)-th local value vector, an (m_1)-th local key vector and an (m_1)-th local downsampling vector, combine the (m_1)-th local value vector, an (m_1)-th local key vector and the (m_1)-th local downsampling vector to thereby generate an (m_1)-th local self-attention vector, generate an (m_1)-th local value prompt vector from the (m_1)-th local self-attention vector through an (m_1)-th local value prompt generator of the (m_1)-th local prompt generator, generate an (m_1)-th local key prompt vector from the (m_1)-th local self-attention vector through an (m_1)-th local key prompt generator of the (m_1)-th local prompt generator, and generate an (m_1)-th local downsampling prompt vector from the (m_1)-th local self-attention vector through an (m_1)-th local downsampling prompt generator of the (m_1)-th local prompt generator, (ii-1-b) perform the self-attention on the embedding vector through a first global attention layer of the first global prompt generator to thereby generate a first global value vector, a first global key vector and a first global downsampling vector, combine the first global value vector, the first global key vector and the first global downsampling vector to thereby generate a first global self-attention vector, generate a first global value prompt vector from the first global self-attention vector through a first global value prompt generator of the first global prompt generator, generate a first global key prompt vector from the first global self-attention vector through a first global key prompt generator of the first global prompt generator, and generate a first global downsampling prompt vector from the first global self-attention vector through a first global downsampling prompt generator of the first global prompt generator, and (ii-1-c) merge the (m_1)-th local value prompt vector and the first global value prompt vector to thereby generate a (m_1)-th merged value prompt vector, merge the (m_1)-th local key prompt vector and the first global key prompt vector to thereby generate a (m_1)-th merged key prompt vector, and merge the (m_1)-th local downsampling prompt vector and the first global downsampling prompt vector to thereby generate a (m_1)-th merged downsampling prompt vector, and at the (iii_1), (iii-1-a) perform a self-attention on the (j-1)-th hidden status vector through an (m_j)-th local attention layer of the (m_j)-th local prompt generator to thereby generate an (m_j)-th local value vector, an (m_j)-th local key vector and an (m_j)-th local downsampling vector, combine the (m_j)-th local value vector, an (m_j)-th local key vector and the (m_j)-th local downsampling vector to thereby generate an (m_j)-th local self-attention vector, generate an (m_j)-th local value prompt vector from the (m_j)-th local self-attention vector through an (m_j)-th local value prompt generator of the (m_j)-th local prompt generator, generate an (m_j)-th local key prompt vector from the (m_j)-th local self-attention vector through an (m_j)-th local key prompt generator of the (m_j)-th local prompt generator, and generate an (m_j)-th local downsampling prompt vector from the (m_j)-th local self-attention vector through an (m_j)-th local downsampling prompt generator of the (m_j)-th local prompt generator, (iii-1-b) perform the self-attention on the (j-1)-th hidden status vector through a j-th global attention layer of the first global prompt generator to thereby generate a j-th global value vector, a j-th global key vector and a j-th global downsampling vector, combine the j-th global value vector, the j-th global key vector and the j-th global downsampling vector to thereby generate a j-th global self-attention vector, generate a j-th global value prompt vector from the j-th global self-attention vector through a j-th global value prompt generator of the j-th global prompt generator, generate a j-th global key prompt vector from the j-th global self-attention vector through a j-th global key prompt generator of the j-th global prompt generator, and generate a j-th global downsampling prompt vector from the j-th global self-attention vector through a j-th global downsampling prompt generator of the j-th global prompt generator, and (iii-1-c) merge the (m_j)-th local value prompt vector and the j-th global value prompt vector to thereby generate a (m_j)-th merged value prompt vector, merge the (m_j)-th local key prompt vector and the j-th global key prompt vector to thereby generate a (m_j)-th merged key prompt vector, and merge the (m_j)-th local downsampling prompt vector and the j-th global downsampling prompt vector to thereby generate a (m_j)-th merged downsampling prompt vector.

As another example, at the process of (I), the processor allows the m-th local large multimodal model to: at the (ii_2), perform operation on the embedding vector through the (m_1)-th transformer block by referring to the (m_1)-th merged value prompt vector, the (m_1)-th merged key prompt vector, and the (m_1)-th merged downsmapling prompt vector, to thereby generate the first hidden status vector, and at the (iii_1), perform operation on the (j-1)-th hidden status vector through the (m_j)-th transformer block by referring to the (m_j)-th merged value prompt vector, the (m_j)-th merged key prompt vector, and the (m_j)-th merged downsmapling prompt vector, to thereby generate the j-th hidden status vector.

As another example, at the process of (II), the processor transmits the updated information of the (m_1)-th local prompt generator to the (m_k)-th local prompt generator to the server, and thus allows the server to update the first global prompt generator to the k-th global prompt generator respectively by using at least part of first average parameters to k-th average parameters respectively, wherein the first average parameters are obtained from averages or weighted averages of parameters of the (1_1)-th local prompt generator to parameters of the (n_1)-th local prompt generator, and wherein the k-th average parameters are obtained from averages or weighted averages of parameters of the (1_k)-th local prompt generator to parameters of the (n_k)-th local prompt generator.

The accompanying drawings used to explain example embodiments of the present disclosure are only part of example embodiments of the present disclosure and other drawings can be obtained based on the drawings by those skilled in the art of the present disclosure without inventive work.
Fig. 1 is a drawing schematically illustrating a learning device of a federated continual learning for a large multimodal model.
Fig. 2 is a drawing schematically illustrating a system of the federated continual learning for the large multimodal model.
Fig. 3 is a drawing schematically illustrating a method of the federated continual learning for the large multimodal model.
Fig. 4 is a drawing schematically illustrating a prompt generator for the large multimodal model.
Fig. 5 is a drawing schematically illustrating a large language model layer for the large multimodal model.

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the present disclosure, although different, are not necessarily mutually exclusive. For example, a particular feature, structure, or characteristic described herein in connection with one embodiment may be implemented within other embodiments without departing from the spirit and scope of the present disclosure. In addition, it is to be understood that the position or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to which the claims are entitled. In the drawings, like numerals refer to the same or similar functionality throughout the several views.

To allow those skilled in the art to carry out the present disclosure easily, the example embodiments of the present disclosure will be explained by referring to attached diagrams in detail as shown below.

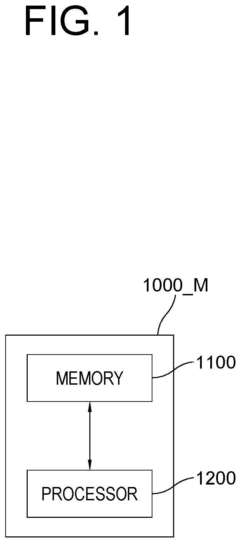

Fig. 1 is a drawing schematically illustrating a learning device of a federated continual learning for a large multimodal model. As shown in Fig. 1, the learning device 1000_m may include a memory 1100 that stores instructions for the federated continual learning of the large multimodal model and a processor 1200 configured to perform operations for the federated continual learning of the large multimodal model.

Specifically, the learning device 1000_m may achieve a desired system performance by using combinations of at least one computing device and at least one computer software, e.g., a computer processor, a memory, a storage, an input device, an output device, or any other conventional computing components, an electronic communication device such as a router or a switch, an electronic information storage system such as a network-attached storage (NAS) device and a storage area network (SAN) as the computing device and any instructions that allow the computing device to function in a specific way as the computer software.

The processor of the computing device may include hardware configuration of MPU (Micro Processing Unit) or CPU (Central Processing Unit), cache memory, data bus, etc. Additionally, the computing device may further include OS and software configuration of applications that achieve specific purposes.

However, a case in which the computing device includes an integrated processor having a medium, a processor and a memory therein for carrying out the present disclosure is not excluded.

Meanwhile, the processor 1200 of the learning device 1000_m is configured to execute the instructions stored in the memory 1100, wherein, according to the instructions, the processor 1200 may perform processes of: (I) inputting at least one training data, which includes natural language instructing data for training and vision data for training, obtained from an m-th training data set having been generated to perform a federated continual learning on an m-th local large multimodal model, to the m-th local large multimodal model, wherein the processor is for performing a federated continual learning on the m-th local large multimodal model which is selected among a first local large multimodal model having been generated to perform a first task to an n-th local large multimodal model having been generated to perform an n-th task by referring to a trained global large multimodal model stored in a server, wherein n is an integer equal to or larger than 2, to thereby allow the m-th local large multimodal model to (i) embed the natural language instructing data for training through a text encoder to thereby generate word tokens, embed the vision data for training through a vision encoder to thereby generate visual features, convert the visual features through a projection layer to thereby generate visual tokens, and embed the word tokens and the visual tokens through an embedding layer to thereby generate an embedding vector, (ii) (ii_1) generate an (m_1)-th local prompt vector from the embedding vector through an (m_1)-th local prompt generator, generate an (m_1)-th global prompt vector from the embedding vector through a first global prompt generator, wherein the first global prompt generator corresponds to a global large multimodal model and wherein the first global prompt generator is updated at a present time by referring to at least part of a (1_1)-th local prompt generator corresponding to the first local large multimodal model to an (n_1)-th local prompt generator corresponding to the n-th local large multimodal model, and merge the (m_1)-th local prompt vector and the (m_1)-th global prompt vector to thereby generate an (m_1)-th merged prompt vector, and (ii_2) perform operation on the embedding vector by referring to the (m_1)-th merged prompt vector through an (m_1)-th transformer block of a large language model to thereby generate a first hidden status vector, (iii) (iii_1) generate an (m_j)-th local prompt vector from a (j-1)-th hidden status vector through an (m_j)-th local prompt generator, wherein j is an integer increasing from 2 to k and wherein k is an integer equal to or larger than 2, generate an (m_j)-th global prompt vector from the (j-1)-th hidden status vector through a j-th global prompt generator, wherein the j-th global prompt generator corresponds to the global large multimodal model and wherein the j-th global prompt generator is updated at a present time by referring to at least part of a (1_j)-th local prompt generator corresponding to the first local large multimodal model to an (n_j)-th local prompt generator corresponding to the n-th local large multimodal model, and merge the (m_j)-th local prompt vector and the (m_j)-th global prompt vector to thereby generate an (m_j)-th merged prompt vector, and (iii_2) perform operation on the (j-1)-th hidden status vector by referring to the (m_j)-th merged prompt vector through an (m_j)-th transformer block of the large language model to thereby generate a j-th hidden status vector, and (iv) repeat learning iteration using a loss having been generated by referring to a k-th hidden status vector output from an (m_k)-th transformer block and a Ground Truth corresponding to at least one of the training data, wherein the learning iteration is updating at least part of the (m_k)-th transformer block to the (m_1)-th transformer block and the (m_k)-th local prompt generator to the (m_1)-th local prompt generator by using the loss; and (II) when a repeated cardinal number of the learning iteration reaches a predetermined number so that one learning round is completed, transmitting at least part of updated information of the (m_1)-th local prompt generator to the (m_k)-th local prompt generator, to thereby update the first global prompt generator to the k-th global prompt generator of the global large multimodal model by referring to at least part of updated information of the (1_1)-th local prompt generator to a (1_k)-th local prompt generator corresponding to the first local large multimodal model to updated information of the (n_1)-th local prompt generator to an (n_k)-th local prompt generator corresponding to the n-th local large multimodal model.

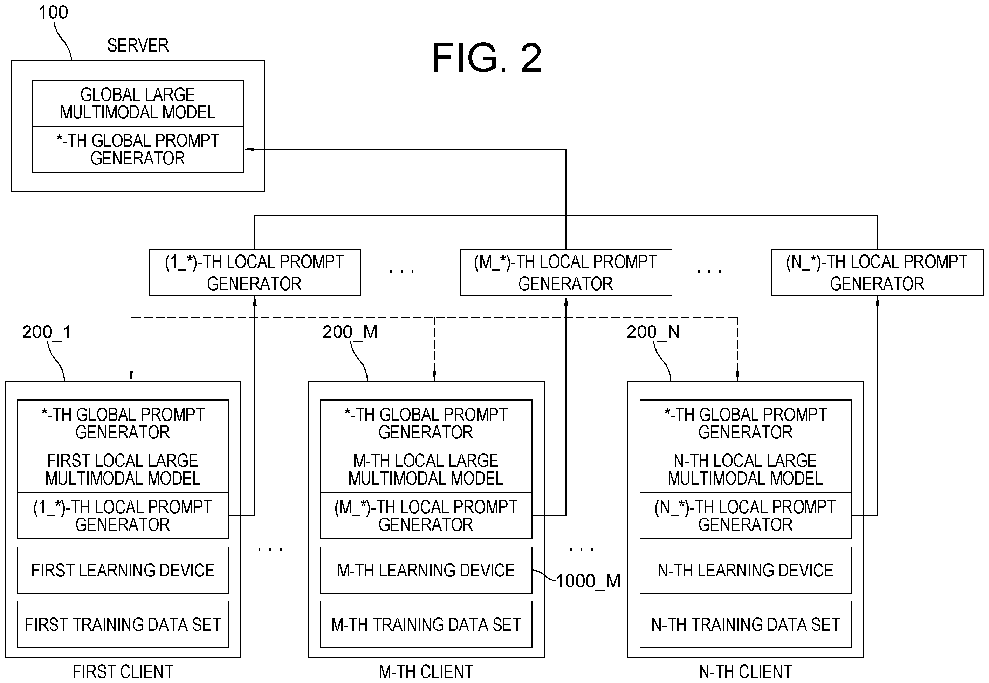

The method for the federated continual learning of the large multimodal model using the learning device according to one example embodiment of the present disclosure configured as above can be described by referring to Figs. 2 to 5 as below.

First, as shown in Fig. 2, each of a first client 200_1 to an n-th client 200_n may generate a first local large multimodal model for performing a first task to an n-th local large multimodal model for performing an n-th task by referring to a trained global large multimodal model stored in a server 100. Said n may be an integer equal to or larger than 2. Herein, the local large multimodal model may include a global prompt generator and a local prompt generator.

And, at least part of the first client 200_1 to the n-th client 200_n may train their corresponding local large multimodal models by using their own training data sets such that they can perform their own tasks, and may transmit respective pieces of updated information of their corresponding local prompt generators included in their corresponding trained large multimodal models. Then, the server 100 may update the global prompt generator included in the global large multimodal model by referring to the updated information of the local prompt generators received from the clients. That is, the server 100 may update the global prompt generators included in the global large multimodal model by referring to the information of updated parameters of the local prompt generators, and transmit the updated information of the global prompt generator to the first client 200_1 to the n-th client 200_n to thereby allow the first client 200_1 to the n-th client 200_n to update the respective global prompt generators included in the respective local large multimodal models.

Herein, each of the first client 200_1 to the n-th client 200_n performs the federated continual learning on each of the first local large multimodal model to the n-th local large multimodal model by using each of the first training data set and the n-th training data set, through each of the first learning device to the n-th learning device corresponding to each of the first client 200_1 to the n-th client 200_n.

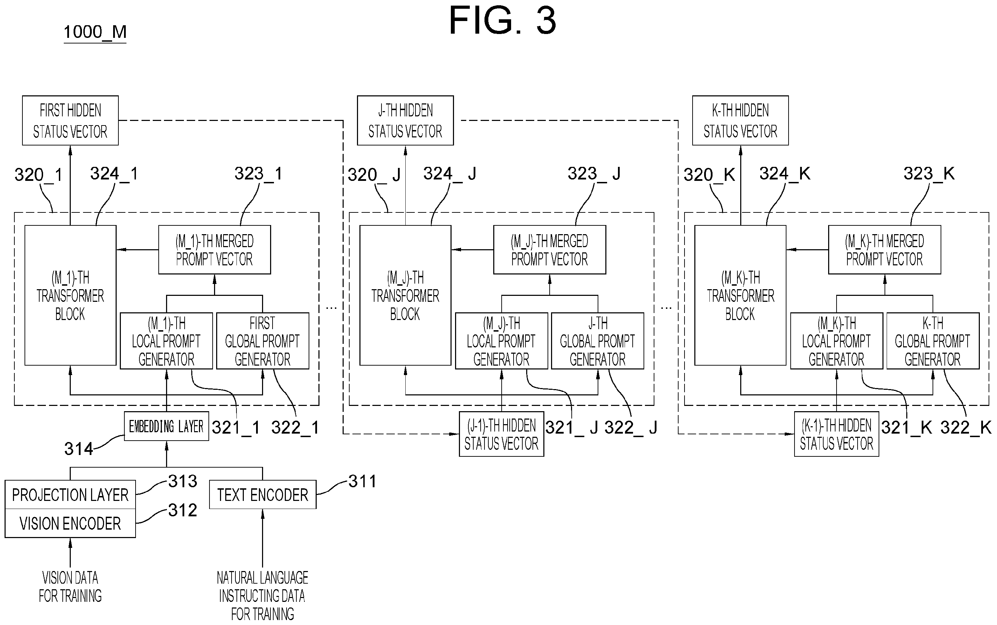

In this state, an m-th client including an m-th local large multimodal model, which is one among the first local large multimodal model to the n-th local large multimodal model, may perform the federated continual learning for the m-th local large multimodal model through the m-th learning device 1000_m by using an m-th training data set included in the m-th client, which is described in detail by referring to Fig. 3 as below. For reference, although the description focuses on the m-th learning device 1000_m, detailed description for the other learning devices is omitted since the operation of the other learning devices of the other clients will be the same.

The m-th learning device 1000_m corresponding to the m-th client having the m-th local large multimodal model may input at least one of the training data obtained from the m-th training data set, generated for the federated continual learning of the m-th local large multimodal model, to the m-th local large multimodal model. Herein, the training data may include natural language instructing data for training and vision data for training.

Then, the m-th learning device 1000_m of the m-th local large multimodal model can embed natural language instructing data for training through the text encoder 311 to thereby generate word tokens, embed vision data for training through the vision encoder 312 to thereby generate visual features, and convert the visual features through the projection layer 313 to thereby generate visual tokens.

Herein, the vision encoder 312 can use various encoders such as NFNet-F6, ViT (Vision Transformer), CLIP ViT, Eva-CLIP ViT, etc., and the projection layer 313 can be implemented by a Linear Projector such as a projection matrix in LLaVA, or by an MLP (Multi-Layer Perception), and in addition, the vision encoder 312 can be implemented in a complex way such as Cross-attention, Q-Former, and P-Former, etc.

Thereafter, the m-th learning device 1000_m of the m-th large local multimodal model may generate an embedding vector by embedding the word tokens and the visual tokens through the embedding layer 314.

Next, the m-th learning device 1000_m of the m-th local large multimodal model may input the embedding vector into the m-th local large language model to thereby allow the m-th local large language model to perform the m-th task on the embedding vector. In this case, the m-th local large language model may include an (m_1)-th large language model layer 320_1 to an (m_k)-th large language model layer 320_k. Also, each of the (m_1)-th large language model layer 320_1 to the (m_k)-th large language model layer 320_k may be implemented to have the same configuration of including a local prompt generator, a global prompt generator, and a transformer block, but the parameters of each may be set differently.

That is, the m-th learning device 1000_m of the m-th local large multimodal model may generate an (m_1)-th local prompt vector from the embedding vector through the (m_1)-th local prompt generator 321_1 of the (m_1)-th large language model layer 320_1, and may generate an (m_1)-th global prompt vector from the embedding vector through the (m_1)-th global prompt generator 322_1. Then, the (m_1)-th local prompt vector and the (m_1)-th global prompt vector may be merged to thereby generate an (m_1)-th merged prompt vector, and merging the (m_1)-th local prompt vector and the (m_1)-th global prompt vector may be performed by a weighted sum operation or an averaging operation.

Herein, the (m_1)-th local prompt generator 321_1 and the first global prompt generator 322_1 are implemented with the same structure but with different parameters. Further, the first global prompt generator 322_1 may be updated at a present time by referring to at least part of the (1_1)-st local prompt generator corresponding to the first local large multimodal model to the (n_1)-th local prompt generator corresponding to the n-th local large multimodal model.

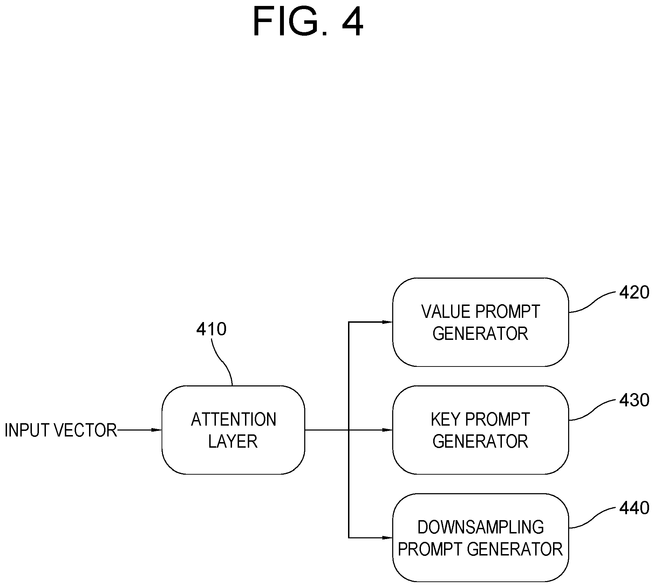

As an example, as shown in Fig. 4, the (m_1)-th local prompt generator 321_1 and the first global prompt generator 322_1 include an attentional layer 410 for generating a self-attention vector from the embedding vector, a value prompt generator 420 for generating a value prompt vector from the self-attention vector, a key prompt generator 430 for generating a key prompt vector from the self-attention vector, and a downsampling prompt generator 440 for generating a downsampling prompt vector from the self-attention vector. Herein, the attention layer 410 can be implemented as a Scaled Dot-Product Attention layer or Multi-Head Attention layer as disclosed in the "Attention is All You Need" paper presented by Google Brain at NIPS 2017, and each of the value prompt generator 420, the key prompt generator 430, and the downsampling prompt generator 440 can be implemented as each pair comprised of an encoder and a decoder.

Accordingly, the m-th learning device 1000_m of the m-th local large multimodal model may perform the self-attention on the embedding vector through the (m_1)-th local attentional layer of the (m_1)-th local prompt generator to thereby generate an (m_1)-th local value vector, an (m_1)-th local key vector and an (m_1)-th local downsampling vector, and then combine the (m_1)-th local value vector, the (m_1)-th local key vector, and the (m_1)-th local downsampling vector to thereby generate an (m_1)-th local self-attention vector. And, the m-th learning device 1000_m of the m-th local large multimodal model may generate an (m_1)-th local value prompt vector from the (m_1)-th local self-attention vector through the (m_1)-th local value prompt generator of the (m_1)-th local prompt generator, generate an (m_1)-th local key prompt vector from the (m_1)-th local self-attention vector through the (m_1)-th local key prompt generator of the (m_1)-th local prompt generator, and generate an (m_1)-th local downsmapling prompt vector from the (m_1)-th local self-attention vector through the (m_1)-th local downsampling prompt generator of the (m_1)-th local prompt generator.

Also, the m-th learning device 1000_m of the m-th local large multimodal model may perform the self-attention on the embedding vector through the first global attentional layer of the first global prompt generator to thereby generate a first global value vector, a first global key vector and a first global downsampling vector, and then combine the first global value vector, the first global key vector, and the first global downsampling vector to thereby generate a first global self-attention vector. And, the m-th learning device 1000_m of the m-th local large multimodal model may generate a first global value prompt vector from the first global self-attention vector through the first global value prompt generator of the first global prompt generator, generate a first global key prompt vector from the first global self-attention vector through the first global key prompt generator of the first global prompt generator, and generate a first global downsmapling prompt vector from the first global self-attention vector through the first global downsampling prompt generator of the first global prompt generator.

Thereafter, the m-th learning device 1000_m of the m-th local large multimodal model may merge the (m_1)-th local value prompt vector and the (m_1)-th global value prompt vector to thereby generate the (m_1)-th merged value prompt vector, merge the (m_1)-th local key prompt vector and the (m_1)-th global key prompt vector to thereby generate the (m_1)-th merged key prompt vector, and merge the (m_1)-th local downsampling prompt vector and the (m_1)-th global downsampling prompt vector to thereby generate the (m_1)-th merged downsampling prompt vector.

By referring to Fig. 3 again, the m-th learning device 1000_m of the m-th local large multimodal model may perform operation on the embedding vector by referring to the (m_1)-th merged prompt vector through the (m_1)-th transformer block 324_1 of the (m_1)-th large language model layer 320_1 to thereby generate a first hidden status vector.

That is, the m-th learning device 1000_m of the m-th local large multimodal model may perform operation on the embedding vector by referring to the (m_1)-th merged value prompt vector, the (m_1)-th merged key prompt vector and the (m_1)-th merged downsampling prompt vector through the (m_1)-th transformer block 324_1 of the (m_1)-th large language model layer 320_1, to thereby generate the first hidden status vector.

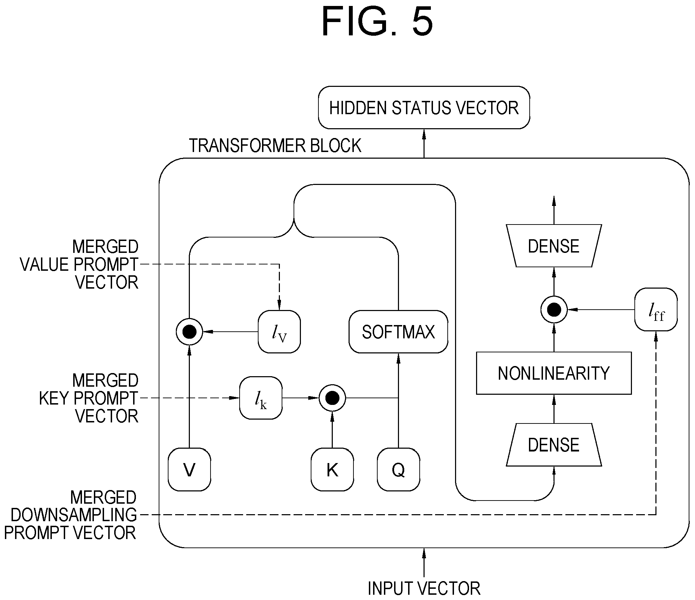

For example, as shown in Fig. 5, the (m_1)-th transformer block 324_1 performs self-attention on an input vector, i.e., the inputted embedding vector, to thereby generate a query vector Q, a key vector K, and a value vector V, wherein the inner product is performed between the merged key prompt vector(Iₖ) and the key vector (K) and then summed with the query vector (Q) and a softmax operation is performed thereon to thereby acquire a softmax result, and the inner product is performed between the merged value prompt vector (Iᵥ) and the value vector (V) and then added to the vector corresponding to the softmax result to thereby generate a z vector. Thereafter, the z vector passes through a feed-forward network (FFN) comprised of two linear layers (i.e., Dense) and one nonlinear activation function (i.e., Nonlinearity), wherein the first linear layer increases a dimensionality of the z vector and passes it through the activation function to thereby acquire an activated z vector. Then, the inner product is performed between the downsampling prompt vector(I_{ff}) and the activated z vector, to thereby acquire an inner product-applied z vector, and the second linear layer compresses the inner product-applied z vector to thereby restore the original dimensionality, i.e., generate the hidden status vector.

According to the Fig. 5, the configuration of the (m_1)-th transformer block 324_1 to the (m_k)-th transformer block 324_k included in the m-th local large multimodal model is schematically illustrated. Each transformer block in the m-th local large multimodal model may be implemented with a transformer described in the paper "Attention is All You Need" presented by Google Brain at 2017 NIPS, and can be implemented as a transformer encoder, a transformer decoder, or a combination of the transformer encoder and the transformer decoder. However, the present disclosure is not limited thereto, and may also be implemented with various models created based on transformers.

Referring back to Fig. 3, the m-th learning device 1000_m of the m-th local large multimodal model may repeat the process of generating a next hidden status vector by inputting the first hidden status vector into its next transformer block.

That is, for each j, which is an integer increasing from 2 to k, the m-th learning device 1000_m of the m-th local large multimodal model may generate an (m_j)-th local prompt vector from the (j-1)-th hidden status vector through the (m_j)-th local prompt generator 321_j of the (m_j)-th large language model layer 320_j, and generate an (m_j)-th global prompt vector from the (j-1)-th hidden status vector through the j-th global prompt generator 322_j. Thereafter, the (m_j)-th local prompt vector and the (m_j)-th global prompt vector may be merged to thereby generate the (m_j)-th merged prompt vector.

Herein, the (m_j)-th local prompt generator 321_j and the j-th global prompt generator 322J are implemented with the same structure, but with different parameters. Further, the j-th global prompt generator 322_j may be updated at a present time by referring to at least part of the (1_j)-th local prompt generator corresponding to the first local large multimodal model to the (n_j)-th local prompt generator corresponding to the n-th local large multimodal model.

More specifically, the m-th learning device 1000_m of the m-th local large multimodal model may perform the self-attention on the (j-1)-th hidden status vector through the (m_j)-th local attentional layer of the (m_j)-th local prompt generator to thereby generate an (m_j)-th local value vector, an (m_j)-th local key vector and an (m_j)-th local downsampling vector, and then combine the (m_j)-th local value vector, the (m_j)-th local key vector, and the (m_j)-th local downsampling vector to thereby generate an (m_j)-th local self-attention vector. And, the m-th learning device 1000_m of the m-th local large multimodal model may generate an (m_j)-th local value prompt vector from the (m_j)-th local self-attention vector through the (m_j)-th local value prompt generator of the (m_j)-th local prompt generator, generate an (m_j)-th local key prompt vector from the (m_j)-th local self-attention vector through the (m_j)-th local key prompt generator of the (m_j)-th local prompt generator, and generate an (m_j)-th local downsmapling prompt vector from the (m_j)-th local self-attention vector through the (m_j)-th local downsampling prompt generator of the (m_j)-th local prompt generator.

Also, the m-th learning device 1000_m of the m-th local large multimodal model may perform the self-attention on the (j-1)-th hidden status vector through the j-th global attentional layer of the j-th global prompt generator to thereby generate a j-th global value vector, a j-th global key vector and a j-th global downsampling vector, and then combine the j-th global value vector, the j-th global key vector, and the j-th global downsampling vector to thereby generate a j-th global self-attention vector. And, the m-th learning device 1000_m of the m-th local large multimodal model may generate a j-th global value prompt vector from the j-th global self-attention vector through the j-th global value prompt generator of the j-th global prompt generator, generate a j-th global key prompt vector from the j-th global self-attention vector through the j-th global key prompt generator of the j-th global prompt generator, and generate a j-th global downsmapling prompt vector from the j-th global self-attention vector through the j-th global downsampling prompt generator of the j-th global prompt generator.

Thereafter, the m-th learning device 1000_m of the m-th local large multimodal model may merge the (m_j)-th local value prompt vector and the (m_j)-th global value prompt vector to thereby generate the (m_j)-th merged value prompt vector, merge the (m_j)-th local key prompt vector and the (m_j)-th global key prompt vector to thereby generate the (m_j)-th merged key prompt vector, and merge the (m_j)-th local downsampling prompt vector and the (m_j)-th global downsampling prompt vector to thereby generate the (m_j)-th merged downsampling prompt vector.

Then, the m-th learning device 1000_m of the m-th local large multimodal model may perform operation on the (j-1)-th hidden status vector by referring to the (m_j)-th merged prompt vector through the (m_j)-th transformer block 324_j of the (m_j)-th large language model layer 320_j to thereby generate a j-th hidden status vector.

That is, the m-th learning device 1000_m of the m-th local large multimodal model may perform operation on the (j-1)-th hidden status vector by referring to the (m_j)-th merged value prompt vector, the (m_j)-th merged key prompt vector and the (m_j)-th merged downsampling prompt vector through the (m_j)-th transformer block 324_j of the (m_j)-th large language model layer 320_j, to thereby generate the j-th hidden status vector.

Thereafter, when the k-th hidden status vector is outputted from the (m_k)-th transformer block 324_k, the m-th learning device 1000_m of the m-th local large multimodal model uses a loss generated by referring to the k-th hidden status vector and a Ground Truth corresponding to one of the training data, to thereby perform a learning iteration for updating at least part of the (m_k)-th transformer block 324_k to the (m_1)-th transformer block 324_1, and the (m_k)-th local prompt generator 321_k to the (m_1)-th local prompt generator 321_1.

Herein, in case of updating the (m_k)-th local prompt generator 321_k to the (m_1)-th local prompt generator 321_1, the m-th learning device 1000_m of the m-th local large multimodal model may update each of the parameters of the (m_k)-th local prompt generator 321_k to each of the parameters of the (m_1)-th local prompt generator 321_1 by using each of an (m_k)-th EMA (Exponential Moving Average) according to the gradient variance of the (m_k)-th local prompt generator 321_k to an (m_1)-th EMA according to the gradient variance of the (m_1)-th local prompt generator 321_1. In other words, the m-th learning device 1000_m of the m-th local large multimodal model may update the (m_k)-th local prompt generator 321_k to the (m_1)-th local prompt generator 321_1 by using RMSprop, the Adadelta algorithm, i.e., algorithm utilizing the EMA, etc.

In this way, the m-th learning device 1000_m repeats the learning iteration of the m-th local large multimodal model, and when a repeated cardinal number of this learning iteration reaches a predetermined number so that one learning round is completed, the m-th learning device 1000_m transmits at least part of updated information of the (m_1)-th local prompt generator 321_1 to the (m_k)-th local prompt generator 321_k to the server, to thereby update the first global prompt generator to the k-th global prompt generator of the global large multimodal model by referring to at least part of updated information of the (1_1)-th local prompt generator to the (1_k)-th local prompt generator corresponding to the first local large multimodal model to updated information of the (n_1)-th local prompt generator to the (n_k)-th local prompt generator corresponding to the n-th local large multimodal model. Herein, the first global prompt generator to the k-th global prompt generator respectively may be updated by using at least part of first average parameters to k-th average parameters respectively, wherein the first average parameters are obtained from averages or weighted averages of parameters of the (1_1)-th local prompt generator to parameters of the (n_1)-th local prompt generator, and wherein the k-th average parameters are obtained from averages or weighted averages of parameters of the (1_k)-th local prompt generator to parameters of the (n_k)-th local prompt generator.

That is, referring to Fig. 2, the m-th client 200_m corresponding to the m-th learning device 1000_m of the m-th local large multimodal model may transmit updated information of the (m_*)-th local prompt generator, i.e., information about the updated parameters of the (m_*)-th local prompt generator, to the server 100, at a time when the learning round is completed.

Then, the server 100 may update the *-th global prompt generator corresponding to the global large multimodal model by using at least part of updated information of the (1_*)-th local prompt generator corresponding to the first local large multimodal model of the first client 200_1 to updated information of the (n_*)-th local prompt generator corresponding to the n-th local large multimodal model of the n-th client 200_n, that is, the updated information of the (m_*)-th local prompt generator corresponding to the m-th local large multimodal model of the m-th client 200_m as m increases from 1 to n. Also, the server 100 may transmit the updated information of the updated *-th global prompt generator, i.e., information about the updated parameters of the *-th global prompt generator, to the first client 200_1 to the n-th client 200_n, to thereby allow each of the first client 200_1 to the n-th client 200_n to update its respective local prompt generators.

Herein, the server 100 may update the global prompt generator when the update information of the local prompt generator from one of the first client 200_1 to the n-th client 200_n is obtained, or may update the global prompt generator by using the update information of the local prompt generators received at a predetermined time interval. The server 100 may also update the global prompt generator, when update information of the local prompt generators is obtained from at least a predetermined number of clients among the first client 200_1 to the n-th client 200_n. However, the present disclosure is not limited thereto, and the global prompt generator may be updated by various methods.

The present disclosure has a technical advantage of providing a method for a federated continual learning of a large multimodal model without using task IDs.

Further, the present disclosure has another technical advantage of providing a method for the federated continual learning of the large multimodal model that avoids catastrophic forgetting.

Besides, the embodiments of the present disclosure as explained above can be implemented in a form of executable program command through a variety of computer means recordable to computer readable media. The computer readable media may store solely or in combination, program commands, data files, and data structures. The program commands recorded in the media may be components specially designed for the present disclosure or may be usable for a skilled human in a field of computer software. The computer readable media include, but are not limited to, magnetic media such as hard drives, floppy diskettes, magnetic tapes, memory cards, solid-state drives, USB flash drives, optical media such as CD-ROM and DVD, magneto-optical media such as floptical diskettes and hardware devices such as a read-only memory (ROM), a random access memory (RAM), and a flash memory specially designed to store and carry out program commands. Program commands may include not only a machine language code made by a compiler but also a high level code that can be used by an interpreter etc., which is executed by a computer. The aforementioned hardware device may work as more than a software module to perform the action of the present disclosure and they may do the same in the opposite case.

As seen above, the present disclosure has been explained by specific matters such as detailed components, limited embodiments, and drawings. While the invention has been shown and described with respect to the preferred embodiments, it, however, will be understood by those skilled in the art that various changes and modification may be made without departing from the spirit and scope of the invention as defined in the following claims.

Accordingly, the thought of the present disclosure must not be confined to the explained embodiments, and the following patent claims as well as everything including variations equal or equivalent to the patent claims pertain to the category of the thought of the present disclosure.

## Claims

1. A federated continual learning method for a large multimodal model, comprising steps of:
(a) inputting, by a learning device, at least one training data, which includes natural language instructing data for training and vision data for training, obtained from an m-th training data set having been generated to perform a federated continual learning on an m-th local large multimodal model, to the m-th local large multimodal model, wherein the learning device is for performing a federated continual learning on the m-th local large multimodal model which is selected among a first local large multimodal model having been generated to perform a first task to an n-th local large multimodal model having been generated to perform an n-th task by referring to a trained global large multimodal model stored in a server, wherein n is an integer equal to or larger than 2, to thereby allow the m-th local large multimodal model to (i) embed the natural language instructing data for training through a text encoder to thereby generate word tokens, embed the vision data for training through a vision encoder to thereby generate visual features, convert the visual features through a projection layer to thereby generate visual tokens, and embed the word tokens and the visual tokens through an embedding layer to thereby generate an embedding vector, (ii) (ii_1) generate an (m_1)-th local prompt vector from the embedding vector through an (m_1)-th local prompt generator, generate an (m_1)-th global prompt vector from the embedding vector through a first global prompt generator, wherein the first global prompt generator corresponds to a global large multimodal model and wherein the first global prompt generator is updated at a present time by referring to at least part of a (1_1)-th local prompt generator corresponding to the first local large multimodal model to an (n_1)-th local prompt generator corresponding to the n-th local large multimodal model, and merge the (m_1)-th local prompt vector and the (m_1)-th global prompt vector to thereby generate an (m_1)-th merged prompt vector, and (ii_2) perform operation on the embedding vector by referring to the (m_1)-th merged prompt vector through an (m_1)-th transformer block of a large language model to thereby generate a first hidden status vector, (iii) (iii_1) generate an (m_j)-th local prompt vector from a (j-1)-th hidden status vector through an (m_j)-th local prompt generator, wherein j is an integer increasing from 2 to k and wherein k is an integer equal to or larger than 2, generate an (m_j)-th global prompt vector from the (j-1)-th hidden status vector through a j-th global prompt generator, wherein the j-th global prompt generator corresponds to the global large multimodal model and wherein the j-th global prompt generator is updated at a present time by referring to at least part of a (1_j)-th local prompt generator corresponding to the first local large multimodal model to an (n_j)-th local prompt generator corresponding to the n-th local large multimodal model, and merge the (m_j)-th local prompt vector and the (m_j)-th global prompt vector to thereby generate an (m_j)-th merged prompt vector, and (iii_2) perform operation on the (j-1)-th hidden status vector by referring to the (m_j)-th merged prompt vector through an (m_j)-th transformer block of the large language model to thereby generate a j-th hidden status vector, and (iv) repeat learning iteration using a loss having been generated by referring to a k-th hidden status vector output from an (m_k)-th transformer block and a Ground Truth corresponding to at least one of the training data, wherein the learning iteration is updating at least part of the (m_k)-th transformer block to the (m_1)-th transformer block and the (m_k)-th local prompt generator to the (m_1)-th local prompt generator by using the loss; and
(b) when a repeated cardinal number of the learning iteration reaches a predetermined number so that one learning round is completed, transmitting, by the learning device, at least part of updated information of the (m_1)-th local prompt generator to the (m_k)-th local prompt generator, to thereby update the first global prompt generator to the k-th global prompt generator of the global large multimodal model by referring to at least part of updated information of the (1_1)-th local prompt generator to a (1_k)-th local prompt generator corresponding to the first local large multimodal model to updated information of the (n_1)-th local prompt generator to an (n_k)-th local prompt generator corresponding to the n-th local large multimodal model.

2. The method of Claim 1, wherein, at the step of (a), in case of updating the (m_k)-th local prompt generator to the (m_1)-th local prompt generator, the learning device updates parameters of the (m_k)-th local prompt generator to parameters of the (m_1)-th local prompt generator respectively by using an (m_k)-th EMA (Exponential Moving Average) according to a gradient variance of the (m_k)-th local prompt generator to an (m_1)-th EMA according to a gradient variance of the (m_1)-th local prompt generator respectively.

3. The method of Claim 1, wherein, at the step of (a), the learning device allows the m-th local large multimodal model to:
at the (ii-1), (ii-1-a) perform a self-attention on the embedding vector through an (m_1)-th local attention layer of the (m_1)-th local prompt generator to thereby generate an (m_1)-th local value vector, an (m_1)-th local key vector and an (m_1)-th local downsampling vector, combine the (m_1)-th local value vector, an (m_1)-th local key vector and the (m_1)-th local downsampling vector to thereby generate an (m_1)-th local self-attention vector, generate an (m_1)-th local value prompt vector from the (m_1)-th local self-attention vector through an (m_1)-th local value prompt generator of the (m_1)-th local prompt generator, generate an (m_1)-th local key prompt vector from the (m_1)-th local self-attention vector through an (m_1)-th local key prompt generator of the (m_1)-th local prompt generator, and generate an (m_1)-th local downsampling prompt vector from the (m_1)-th local self-attention vector through an (m_1)-th local downsampling prompt generator of the (m_1)-th local prompt generator, (ii-1-b) perform the self-attention on the embedding vector through a first global attention layer of the first global prompt generator to thereby generate a first global value vector, a first global key vector and a first global downsampling vector, combine the first global value vector, the first global key vector and the first global downsampling vector to thereby generate a first global self-attention vector, generate a first global value prompt vector from the first global self-attention vector through a first global value prompt generator of the first global prompt generator, generate a first global key prompt vector from the first global self-attention vector through a first global key prompt generator of the first global prompt generator, and generate a first global downsampling prompt vector from the first global self-attention vector through a first global downsampling prompt generator of the first global prompt generator, and (ii-1-c) merge the (m_1)-th local value prompt vector and the first global value prompt vector to thereby generate a (m_1)-th merged value prompt vector, merge the (m_1)-th local key prompt vector and the first global key prompt vector to thereby generate a (m_1)-th merged key prompt vector, and merge the (m_1)-th local downsampling prompt vector and the first global downsampling prompt vector to thereby generate a (m_1)-th merged downsampling prompt vector, and
at the (iii_1), (iii-1-a) perform a self-attention on the (j-1)-th hidden status vector through an (m_j)-th local attention layer of the (m_j)-th local prompt generator to thereby generate an (m_j)-th local value vector, an (m_j)-th local key vector and an (m_j)-th local downsampling vector, combine the (m_j)-th local value vector, an (m_j)-th local key vector and the (m_j)-th local downsampling vector to thereby generate an (m_j)-th local self-attention vector, generate an (m_j)-th local value prompt vector from the (m_j)-th local self-attention vector through an (m_j)-th local value prompt generator of the (m_j)-th local prompt generator, generate an (m_j)-th local key prompt vector from the (m_j)-th local self-attention vector through an (m_j)-th local key prompt generator of the (m_j)-th local prompt generator, and generate an (m_j)-th local downsampling prompt vector from the (m_j)-th local self-attention vector through an (m_j)-th local downsampling prompt generator of the (m_j)-th local prompt generator, (iii-1-b) perform the self-attention on the (j-1)-th hidden status vector through a j-th global attention layer of the first global prompt generator to thereby generate a j-th global value vector, a j-th global key vector and a j-th global downsampling vector, combine the j-th global value vector, the j-th global key vector and the j-th global downsampling vector to thereby generate a j-th global self-attention vector, generate a j-th global value prompt vector from the j-th global self-attention vector through a j-th global value prompt generator of the j-th global prompt generator, generate a j-th global key prompt vector from the j-th global self-attention vector through a j-th global key prompt generator of the j-th global prompt generator, and generate a j-th global downsampling prompt vector from the j-th global self-attention vector through a j-th global downsampling prompt generator of the j-th global prompt generator, and (iii-1-c) merge the (m_j)-th local value prompt vector and the j-th global value prompt vector to thereby generate a (m_j)-th merged value prompt vector, merge the (m_j)-th local key prompt vector and the j-th global key prompt vector to thereby generate a (m_j)-th merged key prompt vector, and merge the (m_j)-th local downsampling prompt vector and the j-th global downsampling prompt vector to thereby generate a (m_j)-th merged downsampling prompt vector.

4. The method of Claim 3, wherein, at the step of (a), the learning device allows the m-th local large multimodal model to:
at the (ii_2), perform operation on the embedding vector through the (m_1)-th transformer block by referring to the (m_1)-th merged value prompt vector, the (m_1)-th merged key prompt vector, and the (m_1)-th merged downsmapling prompt vector, to thereby generate the first hidden status vector, and
at the (iii_1), perform operation on the (j-1)-th hidden status vector through the (m_j)-th transformer block by referring to the (m_j)-th merged value prompt vector, the (m_j)-th merged key prompt vector, and the (m_j)-th merged downsmapling prompt vector, to thereby generate the j-th hidden status vector.

5. The method of Claim 1, wherein, at the step of (b), the learning device transmits the updated information of the (m_1)-th local prompt generator to the (m_k)-th local prompt generator to the server, and thus allows the server to update the first global prompt generator to the k-th global prompt generator respectively by using at least part of first average parameters to k-th average parameters respectively, wherein the first average parameters are obtained from averages or weighted averages of parameters of the (1_1)-th local prompt generator to parameters of the (n_1)-th local prompt generator, and wherein the k-th average parameters are obtained from averages or weighted averages of parameters of the (1_k)-th local prompt generator to parameters of the (n_k)-th local prompt generator.

6. A learning device capable of performing a federated continual learning for a large multimodal model, comprising:
at least one memory that stores instructions; and
at least one processor configured to execute the instructions to perform processes of: (I) inputting at least one training data, which includes natural language instructing data for training and vision data for training, obtained from an m-th training data set having been generated to perform a federated continual learning on an m-th local large multimodal model, to the m-th local large multimodal model, wherein the processor is for performing a federated continual learning on the m-th local large multimodal model which is selected among a first local large multimodal model having been generated to perform a first task to an n-th local large multimodal model having been generated to perform an n-th task by referring to a trained global large multimodal model stored in a server, wherein n is an integer equal to or larger than 2, to thereby allow the m-th local large multimodal model to (i) embed the natural language instructing data for training through a text encoder to thereby generate word tokens, embed the vision data for training through a vision encoder to thereby generate visual features, convert the visual features through a projection layer to thereby generate visual tokens, and embed the word tokens and the visual tokens through an embedding layer to thereby generate an embedding vector, (ii) (ii_1) generate an (m_1)-th local prompt vector from the embedding vector through an (m_1)-th local prompt generator, generate an (m_1)-th global prompt vector from the embedding vector through a first global prompt generator, wherein the first global prompt generator corresponds to a global large multimodal model and wherein the first global prompt generator is updated at a present time by referring to at least part of a (1_1)-th local prompt generator corresponding to the first local large multimodal model to an (n_1)-th local prompt generator corresponding to the n-th local large multimodal model, and merge the (m_1)-th local prompt vector and the (m_1)-th global prompt vector to thereby generate an (m_1)-th merged prompt vector, and (ii_2) perform operation on the embedding vector by referring to the (m_1)-th merged prompt vector through an (m_1)-th transformer block of a large language model to thereby generate a first hidden status vector, (iii) (iii_1) generate an (m_j)-th local prompt vector from a (j-1)-th hidden status vector through an (m_j)-th local prompt generator, wherein j is an integer increasing from 2 to k and wherein k is an integer equal to or larger than 2, generate an (m_j)-th global prompt vector from the (j-1)-th hidden status vector through a j-th global prompt generator, wherein the j-th global prompt generator corresponds to the global large multimodal model and wherein the j-th global prompt generator is updated at a present time by referring to at least part of a (1_j)-th local prompt generator corresponding to the first local large multimodal model to an (n_j)-th local prompt generator corresponding to the n-th local large multimodal model, and merge the (m_j)-th local prompt vector and the (m_j)-th global prompt vector to thereby generate an (m_j)-th merged prompt vector, and (iii_2) perform operation on the (j-1)-th hidden status vector by referring to the (m_j)-th merged prompt vector through an (m_j)-th transformer block of the large language model to thereby generate a j-th hidden status vector, and (iv) repeat learning iteration using a loss having been generated by referring to a k-th hidden status vector output from an (m_k)-th transformer block and a Ground Truth corresponding to at least one of the training data, wherein the learning iteration is updating at least part of the (m_k)-th transformer block to the (m_1)-th transformer block and the (m_k)-th local prompt generator to the (m_1)-th local prompt generator by using the loss; and (II) when a repeated cardinal number of the learning iteration reaches a predetermined number so that one learning round is completed, transmitting at least part of updated information of the (m_1)-th local prompt generator to the (m_k)-th local prompt generator, to thereby update the first global prompt generator to the k-th global prompt generator of the global large multimodal model by referring to at least part of updated information of the (1_1)-th local prompt generator to a (1_k)-th local prompt generator corresponding to the first local large multimodal model to updated information of the (n_1)-th local prompt generator to an (n_k)-th local prompt generator corresponding to the n-th local large multimodal model.

7. The learning device of Claim 6, wherein, at the process of (I), in case of updating the (m_k)-th local prompt generator to the (m_1)-th local prompt generator, the processor updates parameters of the (m_k)-th local prompt generator to parameters of the (m_1)-th local prompt generator respectively by using an (m_k)-th EMA (Exponential Moving Average) according to a gradient variance of the (m_k)-th local prompt generator to an (m_1)-th EMA according to a gradient variance of the (m_1)-th local prompt generator respectively.

8. The learning device of Claim 6, wherein, at the process of (I), the processor allows the m-th local large multimodal model to:
at the (ii-1), (ii-1-a) perform a self-attention on the embedding vector through an (m_1)-th local attention layer of the (m_1)-th local prompt generator to thereby generate an (m_1)-th local value vector, an (m_1)-th local key vector and an (m_1)-th local downsampling vector, combine the (m_1)-th local value vector, an (m_1)-th local key vector and the (m_1)-th local downsampling vector to thereby generate an (m_1)-th local self-attention vector, generate an (m_1)-th local value prompt vector from the (m_1)-th local self-attention vector through an (m_1)-th local value prompt generator of the (m_1)-th local prompt generator, generate an (m_1)-th local key prompt vector from the (m_1)-th local self-attention vector through an (m_1)-th local key prompt generator of the (m_1)-th local prompt generator, and generate an (m_1)-th local downsampling prompt vector from the (m_1)-th local self-attention vector through an (m_1)-th local downsampling prompt generator of the (m_1)-th local prompt generator, (ii-1-b) perform the self-attention on the embedding vector through a first global attention layer of the first global prompt generator to thereby generate a first global value vector, a first global key vector and a first global downsampling vector, combine the first global value vector, the first global key vector and the first global downsampling vector to thereby generate a first global self-attention vector, generate a first global value prompt vector from the first global self-attention vector through a first global value prompt generator of the first global prompt generator, generate a first global key prompt vector from the first global self-attention vector through a first global key prompt generator of the first global prompt generator, and generate a first global downsampling prompt vector from the first global self-attention vector through a first global downsampling prompt generator of the first global prompt generator, and (ii-1-c) merge the (m_1)-th local value prompt vector and the first global value prompt vector to thereby generate a (m_1)-th merged value prompt vector, merge the (m_1)-th local key prompt vector and the first global key prompt vector to thereby generate a (m_1)-th merged key prompt vector, and merge the (m_1)-th local downsampling prompt vector and the first global downsampling prompt vector to thereby generate a (m_1)-th merged downsampling prompt vector, and
at the (iii_1), (iii-1-a) perform a self-attention on the (j-1)-th hidden status vector through an (m_j)-th local attention layer of the (m_j)-th local prompt generator to thereby generate an (m_j)-th local value vector, an (m_j)-th local key vector and an (m_j)-th local downsampling vector, combine the (m_j)-th local value vector, an (m_j)-th local key vector and the (m_j)-th local downsampling vector to thereby generate an (m_j)-th local self-attention vector, generate an (m_j)-th local value prompt vector from the (m_j)-th local self-attention vector through an (m_j)-th local value prompt generator of the (m_j)-th local prompt generator, generate an (m_j)-th local key prompt vector from the (m_j)-th local self-attention vector through an (m_j)-th local key prompt generator of the (m_j)-th local prompt generator, and generate an (m_j)-th local downsampling prompt vector from the (m_j)-th local self-attention vector through an (m_j)-th local downsampling prompt generator of the (m_j)-th local prompt generator, (iii-1-b) perform the self-attention on the (j-1)-th hidden status vector through a j-th global attention layer of the first global prompt generator to thereby generate a j-th global value vector, a j-th global key vector and a j-th global downsampling vector, combine the j-th global value vector, the j-th global key vector and the j-th global downsampling vector to thereby generate a j-th global self-attention vector, generate a j-th global value prompt vector from the j-th global self-attention vector through a j-th global value prompt generator of the j-th global prompt generator, generate a j-th global key prompt vector from the j-th global self-attention vector through a j-th global key prompt generator of the j-th global prompt generator, and generate a j-th global downsampling prompt vector from the j-th global self-attention vector through a j-th global downsampling prompt generator of the j-th global prompt generator, and (iii-1-c) merge the (m_j)-th local value prompt vector and the j-th global value prompt vector to thereby generate a (m_j)-th merged value prompt vector, merge the (m_j)-th local key prompt vector and the j-th global key prompt vector to thereby generate a (m_j)-th merged key prompt vector, and merge the (m_j)-th local downsampling prompt vector and the j-th global downsampling prompt vector to thereby generate a (m_j)-th merged downsampling prompt vector.

9. The learning device of Claim 8, wherein, at the process of (I), the processor allows the m-th local large multimodal model to:
at the (ii_2), perform operation on the embedding vector through the (m_1)-th transformer block by referring to the (m_1)-th merged value prompt vector, the (m_1)-th merged key prompt vector, and the (m_1)-th merged downsmapling prompt vector, to thereby generate the first hidden status vector, and
at the (iii_1), perform operation on the (j-1)-th hidden status vector through the (m_j)-th transformer block by referring to the (m_j)-th merged value prompt vector, the (m_j)-th merged key prompt vector, and the (m_j)-th merged downsmapling prompt vector, to thereby generate the j-th hidden status vector.

10. The learning device of Claim 6, wherein, at the process of (II), the processor transmits the updated information of the (m_1)-th local prompt generator to the (m_k)-th local prompt generator to the server, and thus allows the server to update the first global prompt generator to the k-th global prompt generator respectively by using at least part of first average parameters to k-th average parameters respectively, wherein the first average parameters are obtained from averages or weighted averages of parameters of the (1_1)-th local prompt generator to parameters of the (n_1)-th local prompt generator, and wherein the k-th average parameters are obtained from averages or weighted averages of parameters of the (1_k)-th local prompt generator to parameters of the (n_k)-th local prompt generator.
